# EUROPEAN PATENT APPLICATION

(11) **EP 0 526 240 A2**
(43) Date of publication of application: **03.02.1993**
(21) Application number: 92307011.4
(22) Date of filing: 31.07.1992
(51) Int. Cl.: H04Q 7/04, H04B 7/26

(54) **Call reconnection system in mobile communication**

(30) Priority: 31.07.1991 JP 214759/91
(71) Applicant: NEC CORPORATION, Tokyo (JP)
(72) Inventor: Kito, Eiji, Minato-ku, Tokyo (JP)
(74) Representative: Moir, Michael Christopher

(57) **Abstract**

There is provided a call re-connection system for use in mobile communication which is applicable to portable telephones and automobile telephones. In the call re-connection system, a call is automatically re-connected after speech communication is disconnected due to radio channel abnormality. A mobile station has a storage means for storing a telephone number of a calling party which is contained in a call connection signal, a detection means for detecting restoration of a radio channel to a normal state and an outgoing call means for generating an outgoing call on the basis of the telephone number of the calling party. A call is reconnected on the basis of the telephone number of the calling party which is stored in the storage means when restoration of the radio channel is detected after the speech communication is disconnected due to abnormality of the radio channel.

## Description

### 1. Field of the Invention

The present invention relates to a call re-connection system in mobile communication applied to portable telephones and automobile telephones.

### 2. Description of the Prior Art.

Mobile communication typically applied to automobile telephones and portable telephones has recently become popular. In mobile communication, speech communication is performed between a stationary telephone installed in a home or an office, or a mobile telephone installed in a mobile object such as an automobile, and a telephone installed in another mobile object. A stationary telephone is connected to a telephone office and a base station, which covers a predetermined area, through wires. Each base station is connected to telephones installed in mobile objects (e.g., automobiles) in an area, to which each base station belongs, by radio. In communication between mobile objects, the telephones of the respective mobile stations are connected to base stations in areas, in which the mobile objects are present, by radio. The respective base stations in the areas are connected to each other through wires.

In such mobile communication, if a deterioration in radio wave state occurs as a result of some cause on the side of a mobile object (e.g., when the automobile enters a tunnel) during speech communication, both the base station and the mobile station installed in the mobile object detect it to disconnect the channel. When the radio wave state is restored, in order to resume the speech communication, either the subscriber at the mobile station or the subscriber on the network side (hereinafter to be referred to as a stationary station) must generate an outgoing call again. Since the subscriber at the stationary station cannot determine whether the radio channel state is restored or not, he/she must repeatedly perform a dialing operation. On the other hand, the subscriber at the mobile station needs to perform a dialing operation while monitoring a display indicating the restoration of the normal radio channel state. With such operations, it is very cumbersome for either of the subscribers to regenerate an outgoing call.

### SUMMARY OF THE INVENTION

The present inventor has carefully studied a recent communication service of informing a called party of the telephone number of a calling party through an ISDN (Integrated Services Digital Network), and it is an object of the present invention to provide a call re-connection system which allows a mobile station, in mobile communication, to automatically regenerate an outgoing call when the radio channel state is restored after speech communication with a base station is terminated as a result of an abnormal radio channel state.

Thus, in one aspect the invention provides a call reconnection system in mobile communication operable when communication between a mobile station and a further station is terminated when abnormality is detected in a radio channel during the communication,
said mobile station comprising:
storage means for storing a telephone number of the further station;
detection means for detecting restoration of a radio channel to a normal state; and
outgoing call means for generating an outgoing call to the telephone number of the further station,
wherein when said detection means detects restoration of a normal radio channel after communication is terminated because of abnormality in the radio channel, said outgoing call means causes said mobile station to generate automatically an outgoing call to said further station.

In another aspect the invention provides a call re-connection system in mobile communication in which communication between a calling station and a mobile station, which is started by an outgoing call from said calling station to said mobile station through a base station, is terminated when abnormality is detected in a radio channel during the communication,
said mobile station comprising:
storage means for storing a telephone number of a calling party which is included in a call connection signal;
detection means for detecting restoration of a radio channel to a normal state; and
outgoing call means for generating an outgoing call on the basis of the telephone number of the calling party which is stored in said storage means,
wherein when said detection means detects restoration of a normal radio channel after communication is terminated because of abnormality in the radio channel, said outgoing call means causes said mobile station to automatically generate an outgoing call to said calling station.

Thus, by means of the present invention, if speech or other communication eg. facsimile or data transmission is terminated because of a radio channel abnormality, call reconnection is automatically performed on the basis of a stored telephone number upon restoration of a normal radio channel. The term "speech communication" as used herein includes other forms of communication between the calling and receiving party.

### BRIEF DESCRIPTION OF THE DRAWINGS

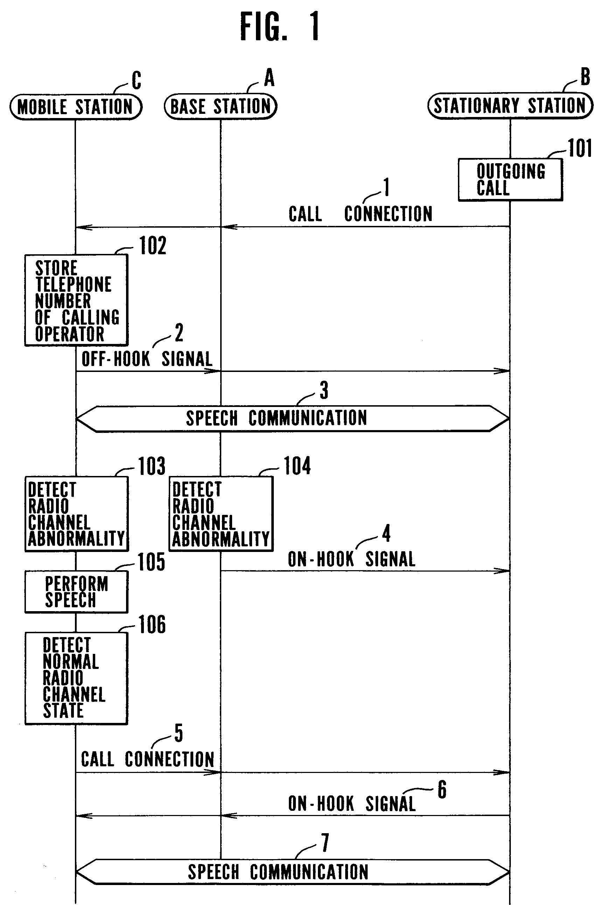

Figure 1 is a flow chart of a call reconnection system according to an embodiment of the present invention.

The present invention will be described below with reference to the accompanying drawing.

Fig. 1 is a flow chart showing an embodiment of the present invention. In this embodiment, by outgoing call operation a stationary station, a speech termination operation due to a radio channel abnormality, and re-connection upon restoration of a normal radio channel are performed. Referring to Fig. 1, reference symbol A denotes a base station which covers a predetermined radio wave reception area; B, a stationary station as a calling station constituted by a calling party's telephone installed in a home or an office and its nearest telephone office; and C, a mobile station constituted by a telephone installed in a mobile object. A call connection signal transmitted from the stationary station B or the base station A to the mobile station C includes the telephone number of the calling party. The mobile station C includes a means for storing this calling party's telephone number. The base station A and the mobile station C respectively include means for detecting radio channel abnormalities. The mobile station C includes a means for detecting the restoration of a normalradio channel.

In this arrangement, when the stationary station B as a calling station generates an outgoing call (step 101), a call connection signal 1 is transmitted to the mobile station C. Upon reception of the signal 1, the mobile station C stores the telephone number information of the calling party which is included in the call connection signal 1 (step 102). When the mobile station C transmits an off-hook signal 2 to the stationary station B, speech communication 3 is started.

Assume that the mobile station C moves to a place where a deterioration of radio wave state occurs, e.g., a tunnel, during speech communication. In this case, if both the base station A and the mobile station C detect a radio channel abnormality on the basis of the reception level or the like (steps 103 and 104), the base station A transmits an on-hook signal 4 to the stationary station B, and the mobile station C performs a speech termination operation (step 105). When the restoration of a normal radio wave state is detected (step 106), call connection 5 is performed with the calling party's telephone number stored in the previous call connection. When an off-hook signal 6 is transmitted from the stationary station B, speech communication 7 is started again.

As has been described above, according to the present invention, if speech communication is terminated because of a radio channel abnormality, call re-connection is automatically performed on the basis of the stored telephone number of a calling party upon restoration of a normal radio channel state. Therefore, an outgoing call is automatically generated to resume speech communication without requiring each station to monitor a radio channel and perform a re-dialing operation.

In the above-described embodiment, speech communication is started by an outgoing call from the stationary station as a calling station to the mobile station. It is, however, clear that the present invention can be applied to speech communication which is started by an outgoing call from a mobile station as a calling station to another mobile station, as in communication between mobile objects.

Whilst in the specific embodiment of the invention described above it is the receiving mobile station which regenerates the call, the invention may equally be applied in a system in which it is a calling mobile station which regenerates the call after interruption. Further, both the calling and receiving mobile stations may have an automatic recall facility provided that a precedence must be established between them eg. by causing a selected one of the stations eg. the calling station to recognise the other station as a mobile from its dialing code, and to leave it to the other station to regenerate the call.

## Claims

1. A call reconnection system in mobile communication operable when communication between a mobile station and a further station is terminated when abnormality is detected in a radio channel during the communication,
said mobile station comprising:
storage means for storing a telephone number of the further station;
detection means for detecting restoration of a radio channel to a normal state; and
outgoing call means for generating an outgoing call to the telephone number of the further station,
wherein when said detection means detects restoration of a normal radio channel after communication is terminated because of abnormality in the radio channel, said outgoing call means causes said mobile station to generate automatically an outgoing call to said further station.

2. A call re-connection system in mobile communication in which communication between a calling station and a mobile station, which is started by an outgoing call from said calling station to said mobile station through a base station, is terminated when abnormality is detected in a radio channel during the communication,
said mobile station comprising:
storage means for storing a telephone number of a calling party which is included in a call connection signal;
detection means for detecting restoration of a radio channel to a normal state; and
outgoing call means for generating an outgoing call on the basis of the telephone number of the calling party which is stored in said storage means,
wherein when said detection means detects restoration of a normal radio channel after communication is terminated because of abnormality in the radio channel, said outgoing call means causes said mobile station to automatically generate an outgoing call to said calling station.

3. A system according to Claim 2, wherein said mobile station and said base station further comprise detection means for detecting abnormality in a radio channel.

4. A system according to Claim 2 or 3, wherein said calling station is a stationary station.

5. A system according to Claim 2 or 3, wherein said calling station is another mobile station.
